(19) Europäisches Patentamt

European Patent Office

Office européen des brevets

(11) **EP 1 001 386 A1**

(12) **EUROPEAN PATENT APPLICATION**

(43) Date of publication:
**17.05.2000 Bulletin 2000/20**

(51) Int. Cl.⁷: $G07C\ 13/00$

(21) Application number: **98309306.3**

(22) Date of filing: **13.11.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**BRITISH TELECOMMUNICATIONS public limited company**
**London EC1A 7AJ (GB)**

(72) Inventor:
**The designation of the inventor has not yet been filed**

(74) Representative:
**Semos, Robert Ernest Vickers et al**
**BT Group Legal Services,**
**Intellectual Property Department,**
**8th Floor, Holborn Centre**
**120 Holborn**
**London EC1N 2TE (GB)**

(54) **Electronic ballotting**

(57) Apparatus for, and method of, electronic ballotting where the identities of candidates are published together with respective telephone numbers. The candidates may be, for example, acts in a talent competition broadcast as a television programme, and the respective telephone numbers are published by being included in the broadcast. Viewers can also send HTML pages containing voting information via the Internet to a server, which provides a count of the votes received for each candidate. A combiner is operative to retrieve the counts of answered calls made to the published numbers and the counts of votes received at the server, and to provide a ballot result. The ballot operator, e.g. the television programme producer, makes a single access call by telephone, or by a web enquiry page, and, after authorisation, is sent the ballot result.

Fig. 10

**Description**

This invention relates to electronic ballotting, and particularly, but not exclusively, to electronic ballotting where the candidates take part in a television programme. The candidates may, for example, be competing acts of an entertaining nature, or may be

In this specification, the terms "ballotting" and "voting" are used interchangeably, as are the terms " electronic ballotting" and "televoting", and the person who is responsible for organising such a ballot is referred to as a "televote operator" or, in the present context, just a "ballot operator".

British Telecommunications public limited company has for some years provided a televoting service as part of its Managed Recorded Information Services. Details of this televoting service are included in British Telecommunications Engineering, Volume 11, Part 1, April 1992, entitled "Special Issue on Managed Recorded Information Services", and particularly the articles "Sourcing Voice Services" (page 14), "RIDE: Recorded Information Distribution Equipment" (page 26), and "Opinion Poll Registration Application" (page 35).

A tool for electronic voting, called "mVote", is available from CDT, Centre for Distance-spanning Technology. Members of an Internet Protocol (IP) multicast group have the capability of creating a voting issue, i.e. a specific ballot. For example, a member might create a voting issue, give it the name "Coffee Break", ask the question "Shall we have a coffee break now or later?", and set the number of options that members may choose from, e.g. "Abstain", "Now" and "Later". The current state of the vote can be displayed as a bar chart or as a pie chart.

In accordance with a first aspect of the present invention there is provided a method of conducting an electronic ballot for a ballot operator, the method comprising the steps of:

> publishing a list of candidates in the ballot together with corresponding associated telephone numbers;
> answering calls made to said telephone numbers;
> providing, for each of said telephone numbers, a respective count of answered calls;
> receiving, at a server accessible via a public data network, messages from computer terminals, each such message identifiably representing a vote for a said candidate;
> providing, for each of said candidates, a respective count of received messages;
> retrieving the respective counts of received messages and the respective counts of answered calls;
> combining the retrieved counts to form a ballot result;
> receiving a ballot result request from the ballot operator; and
> in response, sending the ballot result to the ballot operator.

The present invention provides those members of the public who have a computer arranged for access to the server, conveniently via the Internet, with a choice of method for registering their votes for a given electronic ballot. If the subject of an electronic ballot attracts a large response from members of the public, it may be that the calling rate is far greater than the rate at which calls are answered or than the capacity of the public telephone network to connect calls to the RIDE. In these circumstances some members will experience continual rejection of their repeat attempts to get through to the published telephone number. Those members who have such access to the server can send their vote from their computers by sending, in a preferred embodiment, a message in the form of an HTML (hypertext markup language) page containing an indication of the candidate being voted for. Such a message sent from a computer is immediately accepted for transmission by the data network and thus avoids the wastage of time and effort in redialling again and again. Furthermore, the present invention enables the ballot operator to make just a single request for delivery of the ballot result in the form of the combination of the "telephone" votes, i.e. the number of answered calls, and the "server" votes.

The step of receiving a ballot result request from the ballot operator may comprise a substep of validating the ballot operator in accordance with a security code contained in the request.

Each call may be handled on a regional basis and routed to a corresponding regional centre where the answering and providing steps are performed in respect of calls made in that region. In one such case, the combining step treats the respective counts of received messages as being in respect of a notional region. In another such case, the step of receiving, at a server accessible via a public data network, messages from computer terminals includes substeps of identifying the respective source addresses, grouping the received messages on a corresponding regional basis as for the handling of the calls; and the combining step comprises the substeps of summing, for each of the regions and for each of said candidates, the retrieved respective count of received messages and the retrieved respective count of answered calls to form a respective total, and ranking the respective totals to provide the ballot result in the form of respective regional ballot results.

Alternatively, the combining step comprises the substeps of summing, for each of said candidates, the retrieved respective count of received messages and the retrieved respective count of answered calls to form a respective total, and ranking the respective totals to provide the result of the ballot.

The messages may be e-mail messages each being addressed to an e-mail address selected from a set of published e-mail addresses correspondingly associated with said candidates.

Alternatively, there may be provided the steps of storing on the server, screen display data including identifiers for the candidates; and receiving, at the server, requests sent from the computer terminals for respective users to participate in the ballot, and in response sending the screen display data including identifiers for the candidates to the computer terminals; the messages being constituted by respective HTML pages, as mentioned above with respect to a preferred embodiment, each such page containing data representing the identity of a candidate selected by a respective user from a screen display of the candidate identifiers.

Preferably, the step of receiving requests for respective users to participate in the ballot includes a substep of validating a user in accordance with a security code contained in the request.

Preferably, there are included the steps of :

storing on the server, screen display data including identifiers for current ballots; and

receiving, at the server, requests sent from the computer terminals for respective users to be sent a list of current ballots, and in response sending the screen display data including identifiers for current ballots to the computer terminals;

and said requests sent from the computer terminals for respective users to participate in the ballot may be constituted by respective HTML pages, each such page containing data representing the identity of the ballot selected by a respective user from a screen display of the current ballot identifiers.

Preferably, as appropriate, the step of receiving requests for respective users to be sent a list of current ballots includes a substep of validating a user in accordance with a security code contained in the request.

There may be provided the steps of :

storing data for a respective video presentation relating to each of the candidates;

receiving, at the server, a request sent from a said computer terminal for access to a video presentation identified in the request, and, in response,

including that requesting computer terminal in a multicast session for the requested video presentation.

Preferably, the step of publishing a list of candidates in a ballot together with corresponding associated telephone numbers is constituted by broadcasting a television programme including said respective video presentations and said telephone numbers.

In accordance with a second aspect of the present invention there is provided an apparatus for conducting an electronic ballot for a ballot operator, the apparatus comprising:

means for answering calls made to predetermined telephone numbers, each telephone number being associated with a respective published candidate identity;

means for providing, for each of said telephone numbers, a respective count of answered calls;

a server, accessible via a public data network, and comprising

(i) means for receiving messages from computer terminals, each such message identifiably representing a vote for a said candidate, and

(ii) means for providing, for each of said candidates, a respective count of received messages;

means for retrieving the respective counts of received messages and the respective counts of answered calls;

means for combining the retrieved counts to form a ballot result;

means responsive to receipt of a ballot result request from the ballot operator for sending the ballot result to the ballot operator.

Preferably, both the means for answering calls and the means for providing a respective count of answered calls comprise respective answering means and providing means for each of a plurality of regions, and the combining means is arranged to treat the respective counts of received messages as being in respect of a notional region.

Alternatively, both the means for answering calls and the means for providing a respective count of answered calls comprise respective answering means and providing means for each of a plurality of regions; the means for receiving messages from computer terminals is arranged to identify the respective source addresses, to group the received messages on a corresponding regional basis as for the calls; and the combining means is arranged to sum, for each of the regions and for each of said candidates, the retrieved respective count of received messages and the retrieved respective count of answered calls to form a respective total, and to rank the respective totals to provide the ballot result in the form of respective regional ballot results.

In alternative embodiments of this second aspect, the combining means is arranged to sum, for each of said candidates, the retrieved respective count of received messages and the retrieved respective count of answered calls to form a respective total, and to rank the respective totals to provide the result of the ballot.

Both the means for receiving messages from computer terminals and the means for providing a respective count of received messages may be responsive to such messages in the form of e-mail messages.

Alternatively, the server may be arranged for storage of screen display data including identifiers for the candidates and comprise (ii means for receiving requests sent from the computer terminals for respective users to participate in the ballot, and (ii) means responsive to receipt of such a request for sending the screen display data including identifiers for the candidates to the computer terminals; and the means for receiving messages may be arranged to receive HTML pages, each such page constituting a said message and containing data representing the identity of a candidate.

Preferably, the server is arranged for storage of screen display data including identifiers for current ballots, is responsive to receipt of requests sent from the computer terminals for respective users to be sent a list of current ballots to send the requested screen display data to the computer terminals, and is arranged to receive said requests sent from the computer terminals for respective users to participate in the ballot in the form of respective HTML pages, each such page containing data representing the identity of the ballot selected by a respective user from a screen display of the current ballot identifiers.

There may be included means for validating a person in accordance with an identity for the person and a security code. In such a case, as appropriate, the means for receiving requests sent from the computer terminals for respective users to participate in the ballot may be arranged to derive from each such request a respective identity for a user together with a respective associated security code, and to pass these to the validating means.

The means for receiving a ballot result request from the ballot operator may be arranged to derive from the request an identity for the ballot operator and a security code, and to pass these to the validating means.

The server may be arranged to store data for a respective video presentation relating to each of the candidates; and to be responsive to receipt of a request sent from a said computer terminal for access to a video presentation identified in the request, to include that requesting computer terminal in a multicast session for the requested video presentation.

Specific embodiments of the present invention will now be described with reference to the drawings, in which:-

Figure 1 is a block diagram of the design overview of a known form of a managed recorded information services (MRIS) environment;
Figure 2 is a block diagram of an announcement distribution arrangement used in the MRIS of Figure 1;

Figure 3 is a block diagram of an opinion poll registration application (OPRA) of the MRIS of Figure 1;
Figure 4 is a block diagram of a part of a voting system of the present invention, arranged for collecting votes via the Internet;

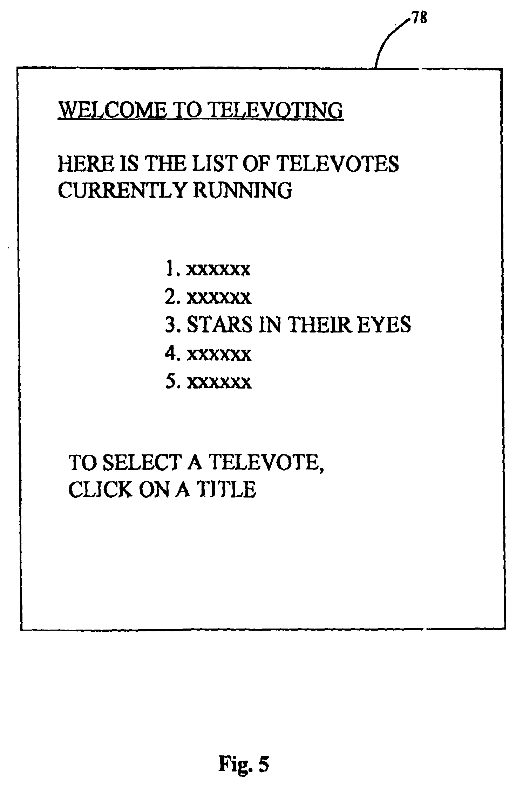

Figure 5 shows a poll menu page;

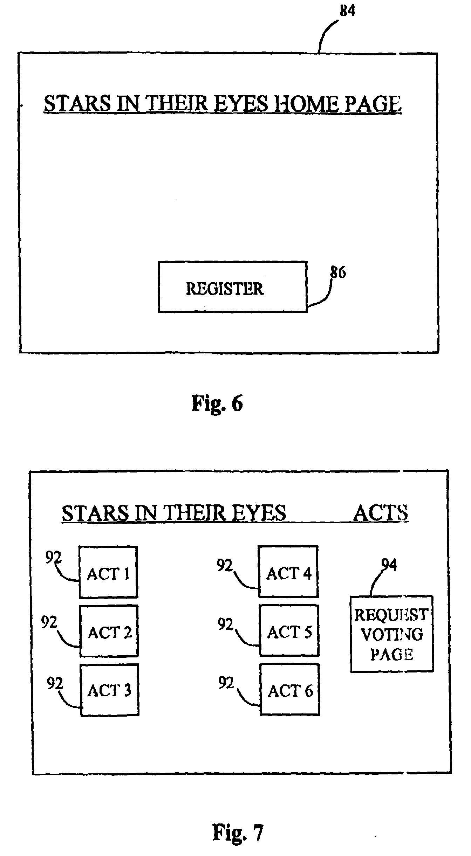

Figure 6 shows a televoting home page;
Figure 7 shows a multicast page containing windows for display of video clips;

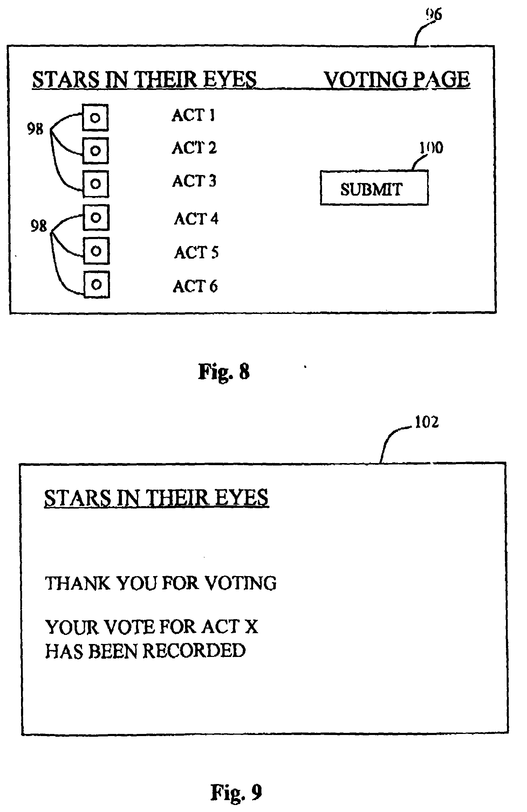

Figure 8 shows a voting page;
Figure 9 shows an acknowledgement page; and
Figure 10 is a block diagram of a voting system of the present invention, and showing televote operator access for delivery of reports.

As background to the present invention, the reader is directed to British Telecommunications Engineering, Volume 11, Part 1, April 1992, entitled "Special Issue on Managed Recorded Information Services", and particularly the articles mentioned above.

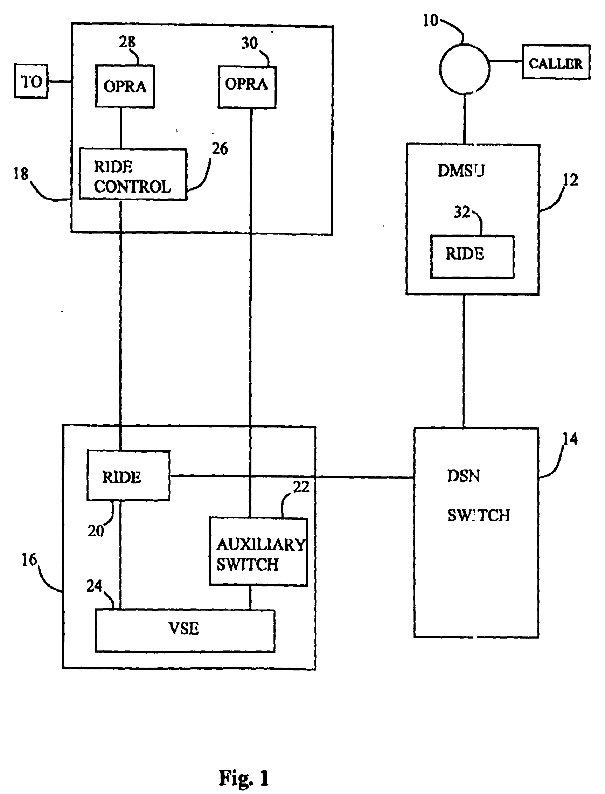

Access to MRIS is as shown in Figure 1, i.e. a caller makes a call via his local exchange 10, which is connected to a digital main switching unit (DMSU) 12, which in turn is connected to an AT&T 5ESS switch 14 forming part of a derived services network (DSN) and referred to as a DSN switch. The DSN switch 14 is connected to a recorded announcement centre (RAC) 16, which in turn is connected to a national announcement centre (NAC) 18. Currently BT's trunk network comprises seventy five DMSUs, the DSN comprises thirteen DSN switches, and there is a RAC in each of eight regions.

Each RAC 16 contains a recorded information distribution equipment (RIDE) 20, an auxiliary switch 22 and voice services equipment (VSE) 24. The NAC 18 contains a RIDE control 26 and two opinion poll registration applications (OPRA) 28 and 30 in the form of programs running on respective UNIX workstation-based computer terminals. The OPRA 28 collects data from the RIDES 20 via asynchronous serial data links, and the OPRA 30, which is very similar to the OPRA 28, collects data from the auxiliary switches 22 via Ethernet connections over a NAC-RAC communications network.

One of the MRIS services is known as Televoting, in which a televote operator, herein referred to as the TO, for example Granada Television for the scenario which now follows, wishes to conduct an opinion poll in connection with its television programme "Stars In Their Eyes", in which a number of acts of entertainment, e.g. song, dance, comedy, and the like, are performed and viewers are invited to vote for their choice of best act by dialling a respective telephone number which the TO has incorporated into the television broadcast for viewers to see on their television screens. In this example, it is supposed that the programme has six competing acts, and that, therefore, there are six telephone numbers displayed, namely, 0891 123401 to 0891 123410, where the last two digits are a code corresponding to the published number allocated to an act, i.e. viewers are invited to call 0891 123401 to register a vote for the first act, and so on.

If a viewer wishes to take part in the Televoting opinion poll, he makes a telephone call to the telephone number corresponding to his choice. Herein, such a viewer is referred to herein generically as a voting viewer or, specifically with respect to voting via his telephone and MRIS, a caller, and such a Televoting opinion poll is referred to as a Televote.

The caller's local exchange 10 recognises, in known manner, that the call is not a local call and routes the call to its allocated DMSU 12, which recognises, by the initial four digits, that the dialled number is one of a set of special services (these include Freefone (0800), Lo-Call (0345), Value Call (0891, 0894, 0897 and 0898), and National Call (0990)). Upon such recognition, the DMSU 12 routes the call to its allocated DSN switch 14, which routes it to the RIDE 20 in its associated RAC 16. In this example the TO notified BT that it expected a high volume of calls to the Televote. In the case where a TO notifies BT that a low to medium volume of calls is expected for a Televote, the DMSU 12 is arranged to route calls for that Televote to the VSE 24 via the auxiliary switch 22. In a variant, the DMSU 12 connects the call to an associated RIDE 32 which is controlled by a further respective OPRA (not shown) and RIDE control (not shown) in the NAC 18.

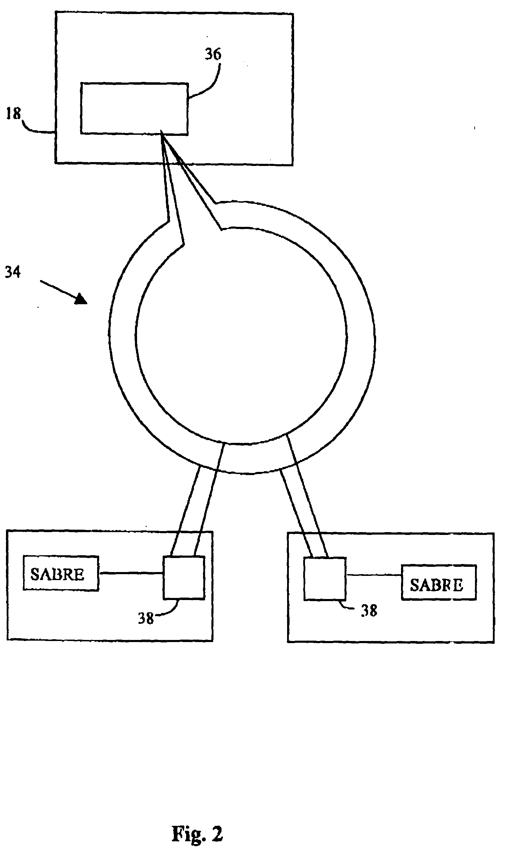

As shown in Figure 2, a distribution network 34 links the NAC 18 to the RACs 16 for distributing announcements from an announcement source 36. The distribution network 34 has two separate 2 Mbit/s rings. Both the transmit and receive paths are used, thereby providing 60 channels per 2 Mbit/s transmission system, enabling access to up to 120 duplicated announcements, and enabling the returning announcement to be monitored to check the integrity of the distribution network 34.

One of the rings is used for announcements which include start-stop signals. These are received by the RACs 16 and stored in start-at-the-beginning registration equipment (SABRE) within the RIDE 20, and an incoming call from a DSN switch is connected by a switch 38 of the RIDE 20 to the appropriate stored announcement in SABRE. Other announcements, e.g. live feed, and non-start-at-the-beginning, are distributed on the other ring, and incoming calls for these announcements are connected by the RIDE 20 directly to the signals received from this ring.

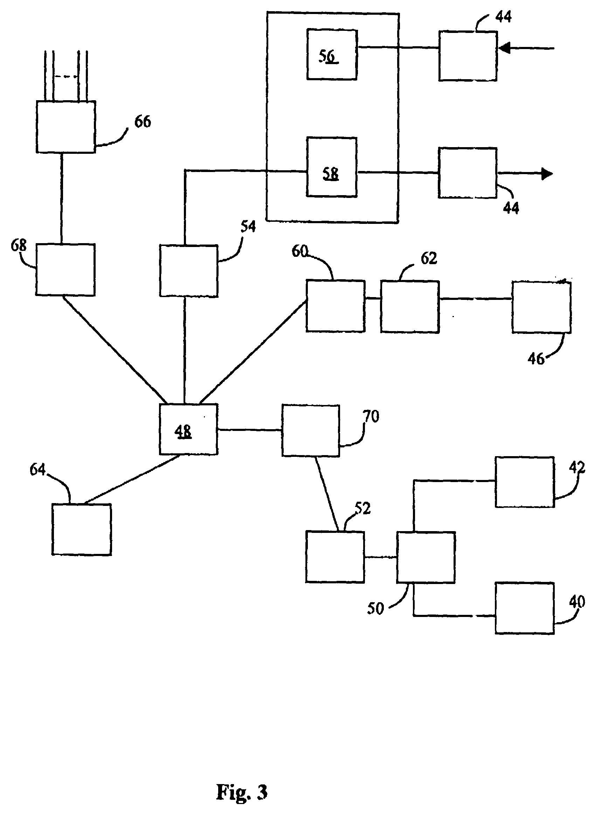

As shown in Figure 3, the OPRA 28 is constituted by a keyboard 40 and visual display unit 42 for use by an operator, modems 44 for binary delivery of reports to customers, a front-end processor (FEP) 46 for voiced delivery of customer-selected parts of summary reports, and a collection of concurrently executing processes which run on a UNIX workstation-based computer terminal having a 32 Mbyte RAM, and two 1.3 Gbyte hard disks constituting an OPRA database 48. These processes provide the following functional OPRA components :-

Operator Interface, which provides a human interface to OPRA, and comprises an operator command interpreter module 50 and a plurality of operator command function modules 52, only one of which is shown;

Report Generation, which obtains a TO-requested report from the OPRA database 48 and reformats it into a binary report file suitable for delivery via a modem 44, and comprises a report generator module 54;

Datel Interface (Datel is a registered trade mark of British Telecommunications public limited company), which enables TOs to obtain reports for their services via the PSTN on data communication lines equipped with modems, and comprises a dial-up module 56 for receiving validation information from a customer, and a dial-back module 58 for interfacing a dial-back modem 44 with the binary report output of the report generator module 54;

Customer Voice Interface, which enables TOs to obtain spoken reports on their services over the telephone, and comprises a voice control module 60, and an Ethernet voice circuit module 62 for managing an Ethernet link between the voice control module 60 and the FEP 46;

Database Management, which provides access to customer and service data, and comprises a database module 64 for managing stored service history files and various logs;

RIDE Data Collection, which comprises a RIDE data collection module 66 for collecting data from RIDE control processors and a process service history module 68 which processes the data to produce service history files; and

System Management, which provides various facilities for starting OPRA and comprises a system control module 70 for controlling its operation and for performing validation of received validation information.

Suppose that the abovementioned caller wishes to vote for act number one, and dials 0891 123401. Upon receipt of the incoming call, the RIDE control processor uses the dialled number information contained in the received signalling information to determine which announcement to play. The RIDE control processor connects the input of the VSE 24 to a SABRE announcement store corresponding to the dialled digits, connects the incoming call to the output of the VSE 24, and commands the playing of that announcement to the caller. The announcement thanks the caller for voting and states that the caller's vote has been registered. Each of the SABRE announcement stores associated with the telephone numbers of this Televote contains the same common announcement. The RIDE control processor also increments the contents of a respective store in its memory, this being the running total, since the last reset of that store, of calls to that number.

The RIDE Data Collection function of OPRA polls the RIDE control processors of all the RIDEs 20 every sixty seconds, collects the respective current counts for the telephone numbers of the Televote for each RAC 16, produces updated service histories and passes these to the database module 64 for writing to the database 48.

The Report Generation function accesses the database 48 and processes the retrieved counts for a specified Televote to provide a report of current count for each of the RACs for each of the telephone numbers of the Televote, and the respective totals for each telephone number. It will be appreciated that in the present example this gives the TO the total votes for each act, with each of the totals being broken down by region. The OPRA 28 can provide three types of service for customers,

(1) a detailed statistics service which provides detailed statistics on the number of calls and their accumulated call holding times split over eight regions for each fifteen minute period,
(2) a summary statistics service which provides the aggregate total of calls to a set of numbers, split over eight regions, and
(3) a one minute statistics service which is similar to the summary statistics service, but provides data on a one minute time period. It is this last service which the TO will use for Televoting and obtaining "instantaneous" results which can be incorporated into the live television programme.

The modems 44 associated with the Datel Interface function are allocated evenly between two functions, namely, modems for dial-up access from TOs to the OPRA 28, and modems for dial-back from OPRA 28 to the TOs. A TO can access the report using its computer terminal and modem, dialling into the Datel Interface and providing its TO identity in the form of a four digit customer identity and a six digit personal identification number (PIN) identifying the statistics service required. This information is passed by the dial-up module 56 to the system control module 70 which performs validation of the TO, commands the dial-up module 56 to break the dial-up connection, and then commands the dial-back module 58 to dial back to a previously stored authorised number for the TO. The system control module 70 then commands the report generator module 54 to send a binary report output to the dial-back module 58 for text display on the TO's computer terminal. Part of an example report using the detailed statistics service is given in Table 1.

Table 1

| | Region | Total Calls |
|---|---|---|
| Choice 1 | | |
| 0891xxxxxx | 1 | 2443 |
| 0891xxxxxx | 2 | 2401 |
| 0891xxxxxx | 3 | 3422 |
| 0891xxxxxx | 4 | 2602 |
| 0891xxxxxx | 5 | 2353 |
| 0891xxxxxx | 6 | 1971 |
| 0891xxxxxx | 7 | 3391 |
| 0891xxxxxx | 8 | 2252 |
| | All Regions | 20835 |
| Choice 2 | | |
| 0891xxxxxx | 1 | 4113 |
| 0891xxxxxx | 2 | 5452 |
| 0891xxxxxx | 3 | 6502 |
| 0891xxxxxx | 4 | 4363 |
| 0891xxxxxx | 5 | 4571 |
| 0891xxxxxx | 6 | 3781 |
| 0891xxxxxx | 7 | 5372 |
| 0891xxxxxx | 8 | 4332 |
| | All Regions | 38486 |

The full report would also include details such as Report Time, Customer Name and Address, Report Name (e.g. Stars In Their Eyes Televote), Report Start Time and Stop Time, Last Reset and Last Collected. The TO can send a command for the OPRA 28 to reset the totals for a particular Televote, and the system control module 70 effects resetting of the relevant database entries and the counts in the RIDE control processors.

The Customer Voice Interface function is performed by the FEP 46 in conjunction with the voice control module 60 which functions as a text-to-speech converter. The TO dials a predetermined telephone number for TO access to the OPRA 28, is connected to a port of the FEP 46, and receives a voice prompt to dial its four digit customer identity and the six digit PIN for the required statistics service using a DTMF keypad. The FEP 46 collects this validation information and passes it to the control module 70 for validating the TO. Once the TO has been validated, the FEP 46 conducts a dialogue with the TO via spoken menu prompts by means of which the TO selects either a summary report or a one minute summary report by keying appropriate keys of the keypad, and commands the report generator 54 to retrieve the requested report from the database 48 and to send the retrieved report to the FEP 46 for voiced delivery to the TO via the voice control module 60. Only summary and one minute statistics services are available via the FEP 46, the detailed statistics service report can only be delivered via a data connection to a TO's computer terminal.

The foregoing is a general description of the operation of the existing OPRA 28 for obtaining a Televote in which voting viewers make their votes by calling published telephone numbers. There now follows a description of an embodiment of the present invention in which a modified form of the OPRA is used in conjunction with additional equipment to provide the voting viewer with the option of voting in that Televote via a web page.

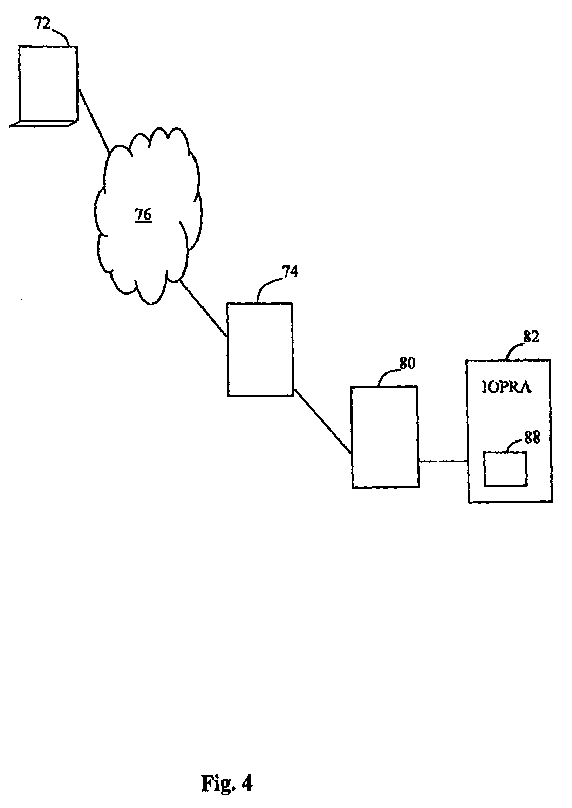

In this embodiment shown in Figure 4, the voting viewer needs to have a computer terminal 72 and a connection to an Internet Service Provider (ISP) 74 via the Internet 76, and for this he is alternatively referred to as a user. When he has logged on to his ISP 74, he sends a universal resource locator (URL) of a poll menu page 78.

The ISP 74 passes the URL to a World Wide Web (WWW) server 80 which runs a televoting application, referred to as an Internet OPRA (IOPRA) 82, including individual Internet poll applications for each current poll. The IOPRA 82 responds by sending to the user the requested poll menu page 78, which gives the user a list of Televotes in which he can participate, each Televote being associated with a hypertext markup language (html) link. It will be appreciated that the TO conducting the "Stars In Their Eyes" Televote will have arranged with the management function of the ISP 74 for an appropriate Internet poll application to run on the WWW server 80, this poll application being specific to "Stars In Their Eyes".

The user selects the "Stars In Their Eyes" Televote by clicking on the appropriate html link, and receives a home page 84 for the "Stars In Their Eyes" television programme giving information on the competing acts, and instructions on how to view the performances of the acts and how to vote, and including a Register button 86. In this embodiment, the television programme also includes the URL of the home page 84 together with the telephone numbers, and in this case the user can send that URL to the WWW server 80 and receive the home page 84 directly.

The user clicks on the Register button 86 and a message including the Internet Protocol (IP) address of the user's computer terminal 72 is sent to the server 80. The IOPRA 82 now performs a voting eligibility check by accessing its database 88 and checking whether this IP address is already in a store of IP addresses of users who have already voted in respect of this particular poll. If the user's IP address is already in the store, the IOPRA 82 sends the user a Televote Access Refused page, and, if the user's IP address is not already in the store, writes this IP address to that store, and grants the user the right to proceed with the Televote.

By the time that all the acts have been performed and the TO has actually started the poll by broadcasting the telephone numbers and the URL of the poll menu page 78, or alternatively the URL of the home page 84, the TO will have provided respective short portions, referred to as video clips, of the televised acts to the ISP 74 which combines them into a single multicast session. If the broadcast is prerecorded and not live, the TO will have provided the video clips well in advance of the scheduled broadcast time.

The IOPRA 82 now associates the user with a multicast session for that poll, by adding the user's ID to his local multicast group for that multicast session, and the user now receives a multicast page 90 containing respective windows 92 for the acts, in which the video clips can be seen simultaneously. By clicking on a window the user can receive digitised audio corresponding to the video clip so that the user can hear the selected act via a sound card and associated loudspeakers at the same time as viewing it. The multicast page 90 also contains a button 94 for requesting a voting page 96.

In a variant, the IOPRA 82 sends a conventional page containing respective buttons or links for the acts, and when the user clicks on one of these buttons, adds the user to a respective local multicast group corresponding to that button whereby the user receives only the video clip, together with the associated audio, for the requested act.

The voting page 96 contains radio buttons 98 for the acts, and a Submit button 100. The user makes a selection from the acts by clicking on the appropriate radio button, and then clicks on the Submit button 100. A message is then sent to the IOPRA 82 including the identity of the selected radio button. The IOPRA 82 responds by sending an acknowledgement page 102 to the user, and incrementing a store in the database 88 corresponding to the selected act.

An OPRA gateway 104 is also resident in the NAC 16 and similarly to the OPRA 28 is constituted by modems 106, an FEP 108 and concurrently executing processes running on a UNIX workstation-based computer terminal 110. These processes provide a Datel Interface function, a Customer Voice Interface function and a Report Generation function similar to the corresponding functions of the OPRA 28, and include a Combine Votes function comprising a retrieve and combine module 112.

In accordance with this embodiment of the present invention, the TO accesses the Televote via the OPRA gateway 104 instead of via the OPRA 28. The TO can access the Televote results in three ways. The TO can telephone to the OPRA gateway FEP 108 and receive voiced summary reports; it can receive text display on its computer terminal via the OPRA gateway modems 106; and it can receive the same information in a web page via the WWW server 80 which accesses the binary report file produced by an OPRA gateway report generator module 114 via an ISDN link 116 into the OPRA gateway 104.

Upon receipt of a request from the TO for a summary report, the OPRA gateway 104 passes this over an Ethernet link 118 to the system control module 70 of the OPRA 28, and over an ISDN link 120 to an equivalent system control module 122 of the IOPRA 82. The system control modules 70 and 122 command their respective report generator modules 54 and 114 to generate their respective reports, and then to send the reports to the OPRA gateway 104. Upon receipt of the reports, the OPRA gateway 104 activates its retrieve and combine module 112, which retrieves the respective totals for each of the acts from the received reports, combines them into a single report, and stores the single report in a dedicated area of the hard disk of the computer terminal 110. The OPRA gateway 104 also activates its report generator function to generate, from the stored single report, a report in a format suitable for input to the Datel and Customer Voice Interface functions of the OPRA gateway 104. In this embodiment, the modems 44 and the FEP 46 in the OPRA 28 are not used to deliver the resulting report to the TO. In variants, the OPRA gateway 104 does not include the modems 106, or the FEP 108, and acts as a transparent relay between the TO and the modems 44 and the FEP 46.

If the TO had made the request via its telephone, then the OPRA gateway FEP 108 and an associated voice control module 124 would operate to deliver the report by voiced speech, and if the TO had made the request via its modem, then a text report would be delivered via the OPRA gateway dial-back modem 106. If, however, the TO had made the request via a customer access page available from an html link (not shown) in the home page 84, and forwarded from the WWW server 80 to the OPRA gateway 104, then the text report would be sent to the WWW server 80 which passes it to a Common Gateway Interface (CGI) script arranged to generate a report page including the report, and to send the report page to the TO's computer terminal. In a variant, the IOPRA gateway 104 has an ISDN link to the TO providing a 128 kbit/s data channel for delivery of the text report to the TO instead of using modems.

In this embodiment of the present invention, the retrieve and combine module 112 generates detailed statistics service reports with the count retrieved from the report sent from the IOPRA 82 being treated as if it were in respect of a ninth region.

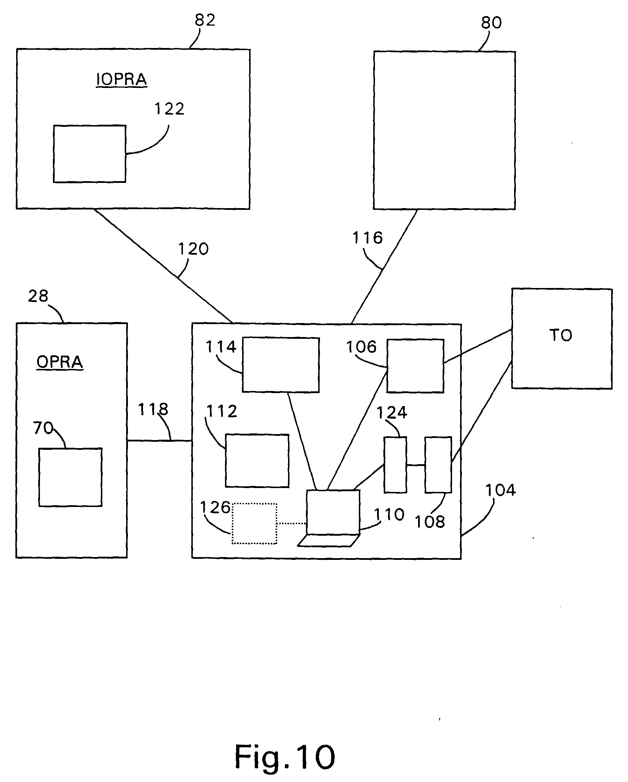

As described above, in contrast to the operation of the OPRA 28, the Televoting facility via the IOPRA 82 does not distinguish between the voting users on the basis of their telephone region, but treats Internet votes as a separate region. In a variant, the Internet votes are split into corresponding, or nearly corresponding, regions so that they can be combined with the individual region votes obtained from the database 48. In this variant, the home page 84 contains a text box and an associated instruction for the user to enter his telephone area code (also known as the national number group or code), e.g. 0181 309, or 01689, and this is also sent to the IOPRA 82 when the user clicks on the Register button 86. Alternatively, the text box requests the user's full telephone number including the national number code, or requests the user's post code. The IOPRA 82 includes a region recognition module 126, shown in dotted lines in Figure 10, which compares the received text with respective regional sets corresponding to the regions of the eight RACs 16 to determine the user's region, and subsequently increments the appropriate store corresponding to the user's vote and to the user's region. If this determination is performed on the basis of the user's national number code, then exact correspondence with the regions covered by the RACs 16 will be achieved. If it is performed on the basis of the user's post code, then the correspondence with the regions covered by the RACs 16 will be exact only if each post code area is associated with a single corresponding DMSU. However, even if a post code area is partly associated with a DMSU in one region, and partly associated with a DMSU in another region, this will probably be sufficient for the TO's purposes.

In a variant, instead of sending the results to the WWW server 80, the OPRA gateway 104 generates a WWW page containing the poll result and stores this page at the WWW server 80. When the TO wishes to retrieve the poll result, it sends via its ISP the URL of the poll result page, and can then view the poll result on its computer terminal. The TO does this by first proceeding through a validation step and then clicking on an html link for Retrieve Poll Result. This returns the URL of the poll result page, and the WWW server retrieves it from store and sends it to the TO. Instead of the request being made manually by clicking on the html link for Retrieve Poll Result each time that the TO requires to receive the poll result, the browser in the TO's computer terminal can be set to reload automatically the WWW page containing the poll result from the WWW server 80 at regular, predetermined intervals. Yet another alternative would be for the WWW server 80 to "push" this page to the TO's computer terminal at regular, predetermined intervals, or each time that there is an updated summary report.

Where a TO wishes to conduct a Televote in conjunction with a television programme of long duration, for example a programme following the progress of a general election as results are declared, it is likely that the TO will find it more practicable to maintain a communication link, rather than to make individual calls every minute to obtain the up-to-date summary statistics report, and even more practicable to maintain an Internet connection with the WWW server 80 and to arrange for automatic reload of the report page, as mentioned above.

In a variant, a list of respective e-mail addresses for the candidates is published, for example by the television programme or in newspapers, and a viewer makes a vote by sending an e-mail message, which need not contain any message, to the address corresponding to the candidate for whom the viewer is casting his vote, and the server is arranged to provide respective counts of the received messages.

An OPRA gateway 104 is also resident in the NAC 16 and similarly to the OPRA 28 is constituted by dial-up and dial-back modules 106 and 107, an FEP 108 and concurrently executing processes running on a UNIX workstation-based computer terminal 110. These processes provide a Datel Interface function, a Customer Voice Interface function and a Report Generation function similar to the corresponding functions of the OPRA 28 and include a Combine Votes function comprising a retrieve and combine module 112.

At intervals of one minute, the OPRA gateway 104 sends a Votes Data Request message over an Ethernet link 118 to the system control module 70 of the OPRA 28, and over an ISDN link 120 to an equivalent system control module 122 of the IOPRA 82. The system control modules 70 and 122 command their respective report generator modules 54 and 123, to construct a respective reply message containing the identities of the acts and their corresponding votes, and to send the reply message to the OPRA gateway 104.

Upon receipt of these reply messages, the OPRA gateway 104 activates its retrieve and combine module 112, which retrieves the respective totals for each of the acts from the received reply messages, combines them into a single report in which the total vote for each act is the sum of the respective votes from the OPRA 28 and the IOPRA 82, and stores the single report in a dedicated area of the hard disk of the computer terminal 110. As is described in more detail herein, the votes from the OPRA 28 may be by region, and the votes from the IOPRA 82 may also be by corresponding region or may be in respect of a pseudo region. The OPRA gateway 104 now activates its report generator module 114 which formats the data in this single report into a binary report file and a text report file for delivery to the TO via its choice of Datel Interface, Customer Voice Interface and WWW server 80, and stores these two report files in the dedicated area of the hard disk.

Thus, in accordance with this embodiment of the present invention, the TO accesses the Televote via the OPRA gateway 104 instead of via the OPRA 28. The TO can access the Televote results in three ways. The TO can telephone to the OPRA gateway FEP 108 and receive voiced summary reports; it can validate itself via the OPRA gateway dial-up module 106, which receives the validation information and passes this to the control module 70 for validation, and can receive text display on its computer terminal via the OPRA gateway dial-back module 107; and it can receive the same information in a web page via the WWW server 80 which accesses the binary report file via an ISDN link 116 into the OPRA gateway 104.

If the TO chooses to contact the OPRA gateway 104 by telephone, the FEP 108 will conduct an initial dialogue with the TO to receive its four digit customer identity and the six digit PIN identifying the required service, and pass received validation information to the control module 70 for validation of the TO. If the TO has requested a summary report, the FEP 108 will retrieve the text report file from the hard disk and send it to the Customer Voice Interface for voiced delivery to the TO. If the TO chooses to contact the OPRA gateway 104 by modem, an OPRA gateway dial-up module 106 will prompt the TO for a PIN and pass the received PIN to the control module 70 for validation. Upon successful validation by the control module 70 of the TO, the control module 70 instructs the FEP 108 to continue. The FEP 108 now instructs that dial-up modem 106 to break the connection to the TO; instructs a dial-back module 107 to make a new connection to the TO; retrieves the binary report file and sends it to the dial-back module 107 for delivery to the TO. In variants, the Datel Interface function of the OPRA gateway 104 performs its own validation and instructs the retrieval of the binary report file.

If the TO chooses to contact the OPRA gateway 104 via the WWW server 80, the server 80 performs its own validation and sends a request to the OPRA gateway 104 for the text report file. Upon receipt of the text report file, the server 80 generates a web page and sends this to the TO.

In this embodiment, the TO uses either the dial-up module 106 and the dial-back module 107 or the FEP 108 of the OPRA gateway 104, and the dial-up and dial-back modules 56 and 58, and the FEP 46 in the OPRA 28 are not required for delivery of the resulting report to the TO. In variants, the OPRA 28 is arranged to receive requests from the TO via the dial-up module 56 or the FEP 46, and, upon validation, to send a message to the OPRA gateway 104 for retrieval of the appropriate report file for delivery to the TO via a dial-back module 58 or the FEP 46.

**Claims**

1. A method of conducting an electronic ballot for a ballot operator, the method comprising the steps of:

publishing a list of candidates in the ballot together with corresponding associated telephone numbers;
answering calls made to said telephone numbers;
providing, for each of said telephone numbers, a respective count of answered calls;
receiving, at a server accessible via a public data network, messages from computer terminals, each such message identifiably representing a vote for a said candidate;

providing, for each of said candidates, a respective count of received messages;

retrieving the respective counts of received messages and the respective counts of answered calls;

combining the retrieved counts to form a ballot result;

receiving a ballot result request from the ballot operator; and

in response, sending the ballot result to the ballot operator.

2. A method as claimed in Claim 1, wherein the step of receiving a ballot result request from the ballot operator comprises a substep of validating the ballot operator in accordance with a security code contained in the request.

3. A method as claimed in either Claim 1 or Claim 2, wherein each said call is handled on a regional basis and is routed to a corresponding regional centre where the answering and providing steps are performed in respect of calls made in that region, and wherein the combining step treats the respective counts of received messages as being in respect of a notional region.

4. A method as claimed in either Claim 1 or Claim 2, wherein each said call is handled on a regional basis and is routed to a corresponding regional centre where the answering and providing steps are performed in respect of calls made in that region; wherein the step of receiving, at a server accessible via a public data network, messages from computer terminals includes substeps of identifying the respective source addresses, grouping the received messages on a corresponding regional basis as for the handling of the calls; and wherein the combining step comprises the substeps of summing, for each of the regions and for each of said candidates, the retrieved respective count of received messages and the retrieved respective count of answered calls to form a respective total, and ranking the respective totals to provide the ballot result in the form of respective regional ballot results.

5. A method as claimed in either Claim 1 or Claim 2, wherein the combining step comprises the substeps of summing, for each of said candidates, the retrieved respective count of received messages and the retrieved respective count of answered calls to form a respective total, and ranking the respective totals to provide the result of the ballot.

6. A method as claimed in any one of Claims 1 to 5, wherein said messages are e-mail messages each being addressed to an e-mail address selected from a set of published e-mail addresses correspondingly associated with said candidates.

7. A method as claimed in any one of Claims 1 to 5, including the steps of :

storing on the server, screen display data including identifiers for the candidates; and receiving, at the server, requests sent from the computer terminals for respective users to participate in the ballot, and in response sending the screen display data including identifiers for the candidates to the computer terminals; and wherein the messages are constituted by respective HTML pages, each such page containing data representing the identity of a candidate selected by a respective user from a screen display of the candidate identifiers.

8. A method as claimed in Claim 7, wherein the step of receiving requests for respective users to participate in the ballot includes a substep of validating a user in accordance with a security code contained in the request.

9. A method as claimed in either Claim 7 or Claim 8, including the steps of :

storing on the server, screen display data including identifiers for current ballots; and receiving, at the server, requests sent from the computer terminals for respective users to be sent a list of current ballots, and in response sending the screen display data including identifiers for current ballots to the computer terminals; and wherein said requests sent from the computer terminals for respective users to participate in the ballot are constituted by respective HTML pages, each such page containing data representing the identity of the ballot selected by a respective user from a screen display of the current ballot identifiers.

10. A method as claimed in Claim 9, when dependent on Claim 7, wherein the step of receiving requests for respective users to be sent a list of current ballots includes a substep of validating a user in accordance with a security code contained in the request.

11. A method as claimed in any one of Claims 7 to 10, including the steps of :

storing data for a respective video presentation relating to each of the candidates;

receiving, at the server, a request sent from a said computer terminal for access to a video presentation identified in the request, and, in response,

including that requesting computer terminal in a multicast session for the requested video presentation.

12. A method as claimed in Claim 11, wherein the step of publishing a list of candidates in a ballot together with corresponding associated telephone numbers is constituted by broadcasting a television programme including said respective video presentations and said telephone numbers.

13. Apparatus for conducting an electronic ballot for a ballot operator, the apparatus comprising:

means for answering calls made to predetermined telephone numbers, each telephone number being associated with a respective published candidate identity;

means for providing, for each of said telephone numbers, a respective count of answered calls;

a server, accessible via a public data network, and comprising

(i) means for receiving messages from computer terminals, each such message identifiably representing a vote for a said candidate, and

(ii) means for providing, for each of said candidates, a respective count of received messages;

means for retrieving the respective counts of received messages and the respective counts of answered calls;

means for combining the retrieved counts to form a ballot result;

means responsive to receipt of a ballot result request from the ballot operator for sending the ballot result to the ballot operator.

14. Apparatus as claimed in Claim 13, wherein both the means for answering calls and the means for providing a respective count of answered calls comprise respective answering means and providing means for each of a plurality of regions, and the combining means is arranged to treat the respective counts of received messages as being in respect of a notional region.

15. Apparatus as claimed in Claim 13, wherein both the means for answering calls and the means for providing a respective count of answered calls comprise respective answering means and providing means for each of a plurality of regions; wherein the means for receiving messages from computer terminals is arranged to identify the respective source addresses, to group the received messages on a corresponding regional basis as for the calls; and wherein the combining means is arranged to sum, for each of the regions and for each of said candidates, the retrieved respective count of received messages and the retrieved respective count of answered calls to form a respective total, and to rank the respective totals to provide the ballot result in the form of respective regional ballot results.

16. Apparatus as claimed in Claim 13, wherein the combining means is arranged to sum, for each of said candidates, the retrieved respective count of received messages and the retrieved respective count of answered calls to form a respective total, and to rank the respective totals to provide the result of the ballot.

17. Apparatus as claimed in any one of Claims 13 to 16, wherein both the means for receiving messages from computer terminals and the means for providing a respective count of received messages are responsive to such messages in the form of e-mail messages.

18. Apparatus as claimed in any one of Claims 13 to 16, wherein the server is arranged for storage of screen display data including identifiers for the candidates and comprises (i) means for receiving requests sent from the computer terminals for respective users to participate in the ballot, and (ii) means responsive to receipt of such a request for sending the screen display data including identifiers for the candidates to the computer terminals;

and wherein the means for receiving messages is arranged to receive HTML pages, each such page constituting a said message and containing data representing the identity of a candidate.

19. Apparatus as claimed in Claim 18, wherein the server is :

arranged for storage of screen display data including identifiers for current ballots;

responsive to receipt of requests sent from the computer terminals for respective users to be sent a list of current ballots to send the requested screen display data to the computer terminals; and

arranged to receive said requests sent from the computer terminals for respective users to participate in the ballot in the form of respective HTML pages, each such page containing data representing the identity of the ballot selected by a respective user from a screen display of the current ballot identifiers.

**20.** Apparatus as claimed in any one of Claims 13 to 19, comprising means for validating a person in accordance with an identity for the person and a security code.

**21.** Apparatus as claimed in Claim 20, when dependent on Claim 18, wherein the means for receiving requests sent from the computer terminals for respective users to participate in the ballot is arranged to derive from each such request a respective identity for a user together with a respective associated security code, and to pass these to the validating means.

**22.** Apparatus as claimed in either Claim 20 or Claim 21, wherein the means for receiving a ballot result request from the ballot operator is arranged to derive from the request an identity for the ballot operator and a security code, and to pass these to the validating means.

**23.** Apparatus as claimed in any one of Claims 13 to 22, wherein the server is arranged to store data for a respective video presentation relating to each of the candidates; and is responsive to receipt of a request sent from a said computer terminal for access to a video presentation identified in the request, to include that requesting computer terminal in a multicast session for the requested video presentation.

**24.** A method of conducting an electronic ballot for a ballot operator, the method being substantially as hereinbefore described with reference to Figures 4 to 10 of the drawings.

**25.** An apparatus for conducting an electronic ballot for a ballot operator, the apparatus being substantially as hereinbefore described with reference to Figures 4 to 10 of the drawings.

**Fig. 1**

**Fig. 2**

EP 1 001 386 A1

Fig. 3

15

72

76

74

80

82

IOPRA

88

Fig. 4

78

WELCOME TO TELEVOTING

HERE IS THE LIST OF TELEVOTES
CURRENTLY RUNNING

1. xxxxxx
2. xxxxxx
3. STARS IN THEIR EYES
4. xxxxxx
5. xxxxxx

TO SELECT A TELEVOTE,
CLICK ON A TITLE

Fig. 5

84

STARS IN THEIR EYES HOME PAGE

REGISTER 86

**Fig. 6**

STARS IN THEIR EYES ACTS

92 ACT 1    92 ACT 4    94

92 ACT 2    92 ACT 5    REQUEST VOTING PAGE

92 ACT 3    92 ACT 6

**Fig. 7**

STARS IN THEIR EYES          VOTING PAGE

98

ACT 1

ACT 2

ACT 3

100

SUBMIT

98

ACT 4

ACT 5

ACT 6

96

**Fig. 8**

STARS IN THEIR EYES

THANK YOU FOR VOTING

YOUR VOTE FOR ACT X
HAS BEEN RECORDED

102

**Fig. 9**

82

IOPRA

122

80

120

116

28

OPRA

70

118

114

106

112

124

126

110

108

104

TO

Fig.10

European Patent Office

**EUROPEAN SEARCH REPORT**

Application Number

EP 98 30 9306

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR 2 749 423 A (BERTONCELLI PATRICK SIMON) 5 December 1997 <br> * abstract; figures * <br> * page 1, line 14 - page 2, line 26 * | 1,5,13, 16 | G07C13/00 |
| Y | | 2,3,14 | |
| A | | 6-10, 17-21 | |
| Y | FR 2 739 474 A (SERPEINESM SA) 4 April 1997 <br> * abstract; claim 5 * | 2 | |
| A | | 22 | |
| Y | US 4 962 525 A (BECKH HORST) 9 October 1990 <br> * abstract; figure 3 * <br> * column 1, line 6 - line 54 * <br> * column 2, line 59 - column 4, line 2 * | 3,14 | |
| Y | US 4 151 370 A (ROOT JOHN J) 24 April 1979 <br><br> * abstract; figure 1 * <br> * column 1, line 11 - line 46 * <br> * column 2, line 12 - line 39 * | 1,5, 7-13,16, 18-21, 23-25 | TECHNICAL FIELDS SEARCHED (Int.Cl.6) <br><br> G07C <br> G06F <br> H04Q <br> H04H |
| Y | WO 98 04083 A (KLINGMAN EDWIN E) 29 January 1998 <br><br> * abstract; figure 3 * <br> * page 4, line 13 - page 5, line 2 * <br> * page 5, line 24 - page 6, line 24 * <br> * page 22, line 22 - page 23, line 3 * | 1,5, 7-13,16, 18-21, 23-25 | |

-/--

The present search report has been drawn up for all claims

| Place of search | Date of completion of the search | Examiner |
|---|---|---|
| THE HAGUE | 16 April 1999 | Buron, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

**Application Number**

EP 98 30 9306

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DE 196 43 690 A (FOERSTL SIGMUND) 30 April 1998<br><br>* abstract; figure *<br>* column 1, line 17 - column 3, line 13 * | 1,5-7,9, 13, 16-18,20 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 16 April 1999 | Buron, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 98 30 9306

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-1999

| Patent document cited in search report | | Publication date | Patent family member(s) | | Publication date |
|---|---|---|---|---|---|
| FR 2749423 | A | 05-12-1997 | NONE | | |
| FR 2739474 | A | 04-04-1997 | NONE | | |
| US 4962525 | A | 09-10-1990 | AT 126645 T | | 15-09-1995 |
| | | | DE 58909384 D | | 21-09-1995 |
| | | | EP 0339469 A | | 02-11-1989 |
| US 4151370 | A | 24-04-1979 | NONE | | |
| WO 9804083 | A | 29-01-1998 | US 5799285 A | | 25-08-1998 |
| DE 19643690 | A | 30-04-1998 | NONE | | |

EPO FORM P0459